# EUROPÄISCHE PATENTSCHRIFT

(11) **EP 3 065 960 B1**
(45) Veröffentlichungstag und Bekanntmachung des Hinweises auf die Patenterteilung: **16.01.2019**
(21) Anmeldenummer: 14789579.1
(22) Anmeldetag: 28.10.2014
(51) Int. Cl.: B60H 1/22, B60H 1/00

(54) **VERFAHREN ZUM BETREIBEN EINES FAHRZEUGTEMPERIERSYSTEMS**
METHOD FOR OPERATING A VEHICLE TEMPERATURE CONTROL SYSTEM
PROCÉDÉ PERMETTANT DE FAIRE FONCTIONNER UN SYSTÈME DE THERMORÉGULATION DE VÉHICULE

(30) Priorität: 08.11.2013 DE 102013222717
(43) Veröffentlichungstag der Anmeldung: 14.09.2016
(73) Patentinhaber: Carparts Kliem Thomas, 78626 Rottweil (DE); Eberspächer Climate Control Systems GmbH & Co. KG, 73730 Esslingen (DE)
(72) Erfinder: KLIEM, Thomas, 78628 Rottweil (DE); ZWECKBRONNER, Jörg, 73329 Kuchen (DE); MARTINKO, Nikola, 73734 Esslingen (DE)
(74) Vertreter: Ruttensperger Lachnit Trossin Gomoll
(86) Internationale Anmeldenummer: PCT/EP2014/073123
(87) Internationale Veröffentlichungsnummer: WO 2015/067504

(56) Entgegenhaltungen:
- DE-A1-102011 003 273
- DE-U1- 20 120 753
- US-A1- 2010 106 810

## Beschreibung

Die vorliegende Erfindung betrifft ein Verfahren zum Betreiben eines Fahrzeugtemperiersystems.

Die in Fahrzeugen vorgesehenen Temperiersysteme sind im Allgemeinen dazu ausgebildet, die in einen Fahrzeuginnenraum einzuleitende Luft dadurch zu erwärmen, dass im Verbrennungsbetrieb einer Brennkraftmaschine generierte Wärme in einem Wärmetauscher auf die in den Fahrzeuginnenraum einzuleitende Luft übertragen wird. Die in den Fahrzeuginnenraum einzuleitende Luft kann erforderlichenfalls auch durch eine Fahrzeugklimaanlage gekühlt werden.

Werden in ein derartiges Fahrzeugtemperiersystem nachträglich Systembereiche als Nachrüstsysteme integriert, ist deren ansteuerungstechnische Verknüpfung mit im Fahrzeug bereits vorhandenen Systembereichen schwierig zu realisieren. Die in einem Fahrzeug bereits vorhandenen Systembereiche bzw. Steuergeräte kommunizieren im Allgemeinen über einen Fahrzeugdatenbus, beispielsweise CAN-Bus, an welchen Nachrüstsysteme im Allgemeinen nicht angebunden werden können. Dies hat zur Folge, dass derartige Nachrüstsysteme, beispielsweise ein als Standheizung nachzurüstendes Fahrzeugheizgerät, nur mit begrenzter Funktionalität betrieben werden können, insbesondere nicht auf in einem Fahrzeug bereits vorhandene Systembereiche des Fahrzeugtemperiersystems einwirken können.

Die DE 201 20 753 U1 offenbart ein Verfahren zum Betreiben eines Fahrzeugtemperiersystems. Das Fahrzeugtemperiersystem umfasst einen als CAN-Bus ausgebildeten Fahrzeugdatenbus. Mit dem Fahrzeugdatenbus stehen ein Gebläsesteuergerät und ein Klimasteuergerät in Verbindung. Das Gebläsesteuergerät erzeugt Ansteuerbefehle für ein Fahrzeuggebläse. Das Klimasteuergerät erzeugt Ansteuerbefehle für wenigstens eine Luftströmungsbeeinflussungseinheit. Ferner empfängt das Klimasteuergerät Ansteuerbefehle für ein Fahrzeuggebläse über den Fahrzeugdatenbus und steuert ein Fahrzeuggebläse auf der Grundlage dieser Ansteuerbefehle an. Das Fahrzeugtemperiersystem umfasst ferner ein brennstoffbetriebenes Fahrzeugheizgerät mit einer diesem zugeordneten Bedienanordnung, um einen Heizbetrieb definierende Information bereitstellen bzw. in das Fahrzeugheizgerät eingeben zu können. Das Fahrzeugheizgerät steht in Ansteuerverbindung mit dem Gebläsesteuergerät.

Es ist die Aufgabe der vorliegenden Erfindung, ein Verfahren zum Betreiben eines Fahrzeugtemperiersystems vorzusehen, mit welchem in einfacher Art und Weise die Integration eines beispielsweise als Nachrüstsystem bereitgestellten Systembereichs und die Verknüpfung mit in einem Fahrzeug bereits vorhandenen Systembereichen eines Fahrzeugtemperiersystems realisierbar ist.

Erfindungsgemäß wird diese Aufgabe gelöst durch ein Verfahren zum Betreiben eines Fahrzeugtemperiersystems, wobei das Fahrzeugtemperiersystem umfasst:
- einen Fahrzeugdatenbus,
- ein mit dem Fahrzeugdatenbus in Datenaustauschverbindung stehendes Gebläsesteuergerät zur Erzeugung von Ansteuerbefehlen wenigstens für wenigstens ein Fahrzeuggebläse,
- ein mit dem Fahrzeugdatenbus in Datenaustauschverbindung stehendes Klimasteuergerät zur Erzeugung von Ansteuerbefehlen wenigstens für wenigstens eine, vorzugsweise eine Mehrzahl von Luftströmungsbeeinflussungseinheiten, wobei das Klimasteuergerät dazu ausgebildet ist, vom Gebläsesteuergerät erzeugte Ansteuerbefehle wenigstens für wenigstens ein Fahrzeuggebläse über den Fahrzeugdatenbus zu empfangen und den wenigstens einen Fahrzeuggebläsemotor entsprechend den empfangenen Ansteuerbefehlen anzusteuern,
- ein vorzugsweise brennstoffbetriebenes Fahrzeugheizgerät zur Bereitstellung von auf die in einen Fahrzeuginnenraum einzuleitende Luft zu übertragender Wärme, wobei dem Fahrzeugheizgerät eine Bedienanordnung zur Eingabe oder/und Erzeugung von einen durchzuführenden Heizbetrieb definierender Information zugeordnet ist, wobei das Fahrzeugheizgerät in Ansteuerverbindung mit dem Gebläsesteuergerät steht,
- eine Fahrzeugdatenbus-Trenneinheit zum Auftrennen des Fahrzeugdatenbusses derart, dass ein die Datenaustauschverbindung zwischen dem Gebläsesteuergerät und dem Klimasteuergerät zulassender, von einem Rest-Fahrzeugdatenbus abgekoppelter Teil-Fahrzeugdatenbus bereitgestellt wird, wobei die Fahrzeugdatenbus-Trenneinheit in Ansteuerverbindung mit dem Gebläsesteuergerät steht,
bei welchem Verfahren nach Aktivieren des Fahrzeugheizgeräts:
a) das Fahrzeugheizgerät einen Aktivierungsansteuerbefehl zum Gebläsesteuergerät ausgibt,
b) das Gebläsesteuergerät in Reaktion auf den Empfang des Aktivierungsansteuerbefehls vom Fahrzeugheizgerät einen Fahrzeugdatenbus-Trennbefehl zur Fahrzeugdatenbus-Trenneinheit ausgibt,
c) die Fahrzeugdatenbus-Trenneinheit in Reaktion auf den Empfang des Fahrzeugdatenbus-Trennbefehls vom Gebläsesteuergerät den Fahrzeugdatenbus zum Bereitstellen des Teil-Fahrzeugdatenbusses auftrennt,
d) nach Bereitstellung des Teil-Fahrzeugdatenbusses das Gebläsesteuergerät einen Aktvierungsansteuerbefehl zum Klimasteuergerät ausgibt,
e) das Klimasteuergerät in Reaktion auf den Empfang des Aktivierungsansteuerbefehls vom Gebläsesteuergerät wenigstens ein Fahrzeuggebläse oder/und wenigstens eine Luftstrombeeinflussungseinheit in einen vorgegebenen Betriebszustand versetzt.

Bei dem erfindungsgemäßen Verfahren ist ein derartiger Aufbau des Fahrzeugtemperiersystems vorgesehen, das das Gebläsesteuergerät, welches grundsätzlich auch dazu vorgesehen ist, Ansteuerbefehle für einen oder ggf. mehrere Fahrzeuggebläsemotoren zu generieren, einerseits in Datenaustauschverbindung mit dem Klimasteuergerät und über dieses insbesondere auch dem Fahrzeuggebläsemotor steht, andererseits aber auch in Ansteuerverbindung mit dem Fahrzeugheizgerät steht. Somit kann dem Gebläsesteuergerät in Form des durch das Fahrzeugheizgerät ausgegebenen Ansteuerbefehls Information über den Betrieb bzw. den Umstand, dass das Fahrzeugheizgerät in Betrieb ist, mitgeteilt werden. Daraufhin kann das Gebläsesteuergerät durch entsprechende Ansteuerung der Fahrzeugdatenbus-Trenneinheit dafür sorgen, dass nur noch ein die Kommunikation des Gebläsesteuergäts mit dem Klimasteuergerät zulassender Teil des Fahrzeugdatenbusses in die im beispielsweise im Standheizbetrieb ablaufende Datenkommunikation eingeschaltet ist; der verbleibende, fahrzeugseitige Teil bzw. Rest-Fahrzeugdatenbus ist von dieser Kommunikation abgekoppelt. Dies hat zur Folge, dass die während des Betriebs des Fahrzeugheizgeräts, also beispielsweise während des Standheizbetriebs, ablaufende Datenübertragung insbesondere zwischen dem Gebläsesteuergerät und dem Klimasteuergerät von anderen an den Fahrzeugdatenbus grundsätzlich angekoppelten Systembereichen bzw. Steuergeräten nicht erkannt wird und somit in diesen anderen Bereichen während des Betriebs des Fahrzeugheizgeräts keine ungeeigneten bzw. in dieser Phase nicht erforderlichen Aktivitäten ausgelöst werden.

Bei einer besonders vorteilhaften Weiterbildung des erfindungsgemäßen Verfahrens kann vorgesehen sein, dass durch den bei der Maßnahme d) durch das Gebläsesteuergerät ausgegebenen Aktivierungsansteuerbefehl das Klimasteuergerät in einen Betriebszustand versetzt wird, wobei im Betriebszustand das Klimasteuergerät wenigstens ein Fahrzeuggebläse oder/und wenigstens eine Luftströmungsbeeinflussungseinheit in einen durch den Aktivierungsansteuerbefehl von dem Gebläsesteuergerät vorgegebenen Betriebszustand versetzt. Nach dem Bereitstellen des Teil-Fahrzeugdatenbusses, in welchem im Wesentlichen nur eine Kommunikation zwischen dem Gebläseteuergerät und dem Klimasteuergerät stattfindet, das Klimasteuergerät somit also keine für dessen Betrieb relevante Informationen vom restlichen Bereich des Fahrzeugdatenbusses empfangen kann, stellt das Gebläsesteuergerät diejenigen Informationen bereit, welche das Klimasteuergät benötigt, um beispielsweise einen Fahrzeuggebläsemotor oder eine oder mehrere Luftströmungsbeeinflussungseinheiten in einen für den durchzuführenden Heizbetrieb geeigneten Zustand zu bringen. Dies ist daher von besonderem Vorteil, da dann im Klimasteuergerät selbst keine Informationen hinterlegt sein müssen, um dieses in die Lage zu versetzen, beispielsweise während eines Standheizbetriebs verschiedene Systembereiche geeignet anzusteuern.

Um während eines Heizbetriebs des Fahrzeugheizgeräts einen Fahrzeuginnenraum geeignet zu erwärmen, also die im Fahrzeugheizgerät bereitgestellte Wärme zuverlässig auf die in den Fahrzeuginnenraum einzuleitende Luft übertragen zu können bzw. diese in geeigneter Weise in den Fahrzeuginnenraum einleiten zu können, wird weiter vorgeschlagen, dass in dem vorgegebenen Betriebszustand wenigstens ein Fahrzeuggebläse zum Betrieb mit einer vorbestimmten Drehzahl, vorzugsweise in einem mittleren Drehzahlbereich, angesteuert wird, oder/und eine Wärmeluftklappeneinheit als Luftströmungsbeeinflussungseinheit in einem eine maximale Temperatur bereitstellenden Stellzustand ist, oder/und wenigstens eine Luftklappeneinheit als Luftströmungsbeeinflussungseinheit in einer Defroststellung ist, oder/und eine Frischluft/Umluft-Klappeneinheit als Luftströmungsbeeinflussungseinheit in einer ein vorbestimmtes Frischluft/Umluft-Verhältnis bereitstellenden Stellung ist.

Um dann, wenn der Betrieb des Fahrzeugheizgeräts beispielsweise auf Grund des Erreichens einer Solltemperatur des Fahrzeuginnenraums oder auf Grund eines ausreichend langen Heizens beendet werden soll, das Fahrzeugtemperiersystem wieder in einen für die Inbetriebnahme des Fahrzeugs geeigneten Zustand zu bringen, wird vorgeschlagen, dass nach Beenden des Betriebs des Fahrzeugheizgeräts:
f) das Gebläsesteuergerät das Ausgeben des Aktivierungsansteuerbefehls an das Klimasteuergerät beendet oder/und einen Deaktivierungsansteuerbefehl an das Klimasteuergerät ausgibt, wobei nach Beenden des Ausgebens des Aktivierungsansteuerbefehls oder/und Empfang des Deaktivierungsansteuerbefehls das Klimasteuergerät das wenigstens eine Fahrzeuggebläse deaktiviert oder/und wenigstens eine Luftströmungsbeeinflussungseinheit in einen vor Durchführung der Maßnahme e) vorgesehenen Grundzustand zurückverstellt und das Klimasteuergerät einen Außerbetriebszustand einnimt,
g) das Gebläsesteuergerät das Ausgeben des Fahrzeugdatenbus-Trennbefehls beendet oder/und einen Fahrzeugdatenbus-Verbinden-Befehl zur Fahrzeugdatenbus-Trenneinheit ausgibt, wobei nach Beenden des Ausgebens des Fahrzeugdatenbus-Trennbefehls oder/und Empfang des Fahrzeugdatenbus-Verbinden-Befehls die Fahrzeugdatenbus-Trenneinheit das Auftrennen des Fahrzeugdatenbusses zum Bereitstellen des Teil-Fahrzeugdatenbusses beendet.

Grundsätzlich kann nicht ausgeschlossen werden, dass beispielsweise auch während eines Standheizbetriebs des Fahrzeugheizgeräts noch vor ausreichender Erwärmung des Fahrzeuginnenraums der Betrieb des Fahrzeugs aufgenommen werden soll. Um in einer derartigen Situation dafür zu sorgen, dass alle Systembereiche des Fahrzeugtemperiersystems in einen für den Betrieb des Fahrzeugs geeigneten Zustand gebracht werden können, wird weiter vorgeschlagen, dass dann, wenn während des Betriebs des Fahrzeugsheizgeräts auf eine Inbetriebnahme eines Fahrzeugs hinweisende Aktivitäten erkannt werden,
h) die Fahrzeugdatenbus-Trenneinheit das Auftrennen des Fahrzeugdatenbusses beendet,
i) das Gebläsesteuergerät nach dem Beenden des Auftrennens des Fahrzeugdatenbusses das Ausgeben des Aktivierungsansteuerbefehls an die Datenbus-Trenneinheit und das Ausgeben des Aktivierungsansteuerbefehls an das Klimasteuergerät beendet.

Da bei dieser Vorgehensweise das Gebläsesteuergerät keine Ansteuerbefehle mehr an das Klimasteuergerät sendet, kann das Klimasteuergerät beispielsweise wieder in seinen Außerbetriebszustand gelangen oder in einen Betriebszustand gelangen, in welchem entsprechend im Fahrzeugdatenbus dann vorhandenen Ansteuerbefehlen eine weitere thermische Konditionierung des Fahrzeugs erfolgen kann.

Da dann, wenn eine derartige Unterbrechung des Standheizbetriebs erfolgt, grundsätzlich nicht davon ausgegangen werden kann, dass bereits eine ausreichende Erwärmung stattgefunden hat, wird vorgeschlagen, dass das Fahrzeugheizgerät den Heizbetrieb vorzugsweise in Abhängigkeit von der Temperatur eines von dem Fahrzeugheizgerät zu erwärmenden Wärmeträgermediums fortsetzt und weiterhin den Aktivierungsansteuerbefehl an das Gebläsesteuergerät ausgibt.

Werden die auf eine Inbetriebnahme eines Fahrzeugs hinweisenden Aktivitäten beendet, noch bevor der eigentliche Heizbetrieb des Fahrzeugheizgeräts beendet werden soll, können gemäß einem weiteren Aspekt der vorliegenden Erfindung die Maßnahmen b) bis e) erneut durchgeführt werden, also in Reaktion auf den nach wie vor anliegenden Aktivierungsansteuerbefehl vom Fahrzeugheizgerät an das Gebläsesteuergerät der Teil-Fahrzeugdatenbus wieder hergestellt werden und die Aktivierung bzw. Ansteuerung des Klimasteuergeräts durch das Gebläsesteuergerät wieder aufgenommen werden.

Die Erfindung betrifft ferner ein Fahrzeugtemperiersystem, insbesondere zur Durchführung eines erfindungsgemäßen Verfahrens, wobei das Fahrzeugtemperiersystem umfasst:
- einen Fahrzeugdatenbus,
- ein mit dem Fahrzeugdatenbus in Datenaustauschverbindung stehendes Gebläsesteuergerät zur Erzeugung von Ansteuerbefehlen wenigstens für wenigstens einen Fahrzeuggebläsemotor,
- ein mit dem Fahrzeugdatenbus in Datenaustauschverbindung stehendes Klimasteuergerät zur Erzeugung von Ansteuerbefehlen wenigstens für wenigstens eine, vorzugsweise eine Mehrzahl von Luftströmungsbeeinflussungseinheiten, wobei das Klimasteuergerät dazu ausgebildet ist, vom Gebläsesteuergerät erzeugte Ansteuerbefehle wenigstens für wenigstens ein Fahrzeuggebläse über den Fahrzeugdatenbus zu empfangen und das wenigstens eine Fahrzeuggebläse entsprechend den empfangenen Ansteuerbefehlen anzusteuern,
- ein vorzugsweise brennstoffbetriebenes Fahrzeugheizgerät zur Bereitstellung von auf die in einen Fahrzeuginnenraum einzuleitende Luft zu übertragender Wärme, wobei dem Fahrzeugheizgerät eine Bedienanordnung zur Eingabe oder/und Erzeugung von einen durchzuführenden Heizbetrieb definierender Information zugeordnet ist, wobei das Fahrzeugheizgerät in Ansteuerverbindung mit dem Gebläsesteuergerät steht,
- eine Fahrzeugdatenbus-Trenneinheit zum Auftrennen des Fahrzeugdatenbusses derart, dass ein die Datenaustauschverbindung zwischen dem Gebläsesteuergerät und dem Klimasteuergerät zulassender, von einem Rest-Fahrzeugdatenbus abgekoppelter Teil-Fahrzeugdatenbus bereitgestellt wird, wobei die Fahrzeugdatenbus-Trenneinheit in Ansteuerverbindung mit dem Gebläsesteuergerät steht.

Die vorliegende Erfindung wird nachfolgend mit Bezug auf die beiliegenden Figuren detailliert beschrieben. Es zeigt:
Fig. 1 in vereinfachter, prinzipartiger Art und Weise ein Fahrzeugtemperiersystem;
Fig. 2 ein Blockschaltbild eines Ansteuersystembereichs des in Fig. 1 dargestellten Fahrzeugtemperiersystems.

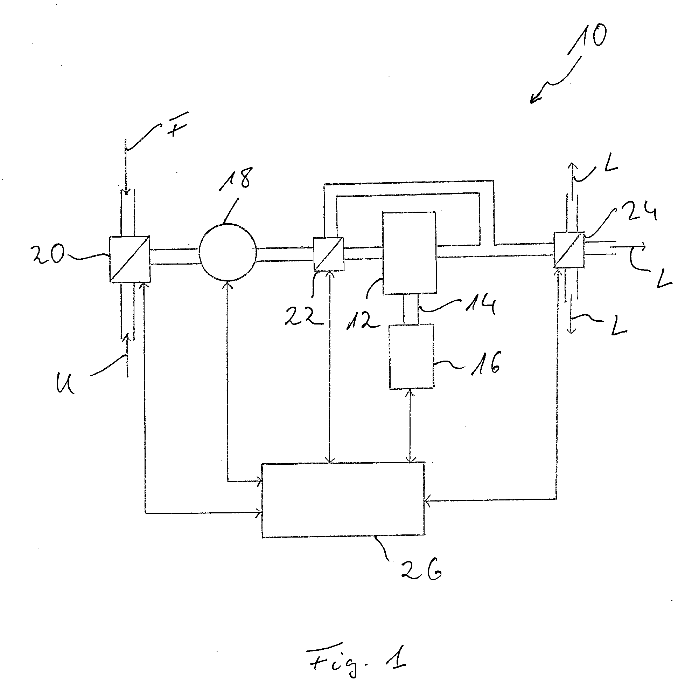

In Fig. 1 ist ein Fahrzeugtemperiersystem allgemein mit 10 bezeichnet. Das Fahrzeugtemperiersystem 10 umfasst als zentralen Bestandteil einen Wärmetauscher 12, in welchem die in einen Fahrzeuginnenraum einzuleitende Luft Wärme aufnehmen kann. Diese Wärme wird in einem in einem Fahrzeugkühlmittelkreislauf 14 zirkulierenden Wärmeträgermedium, also beispielsweise der Fahrzeugkühlflüssigkeit, transportiert. Um insbesondere für einen Standheizbetrieb Wärme bereitstellen zu können, umfasst das Fahrzeugtemperiersystem 10 ferner ein vorzugsweise brennstoffbetriebenes Fahrzeugheizgerät 16, welches beispielsweise als Originalausstattung in ein Fahrzeug und somit das Fahrzeugtemperiersystem 10 integriert sein kann, unter Verwendung der Prinzipien der vorliegenden Erfindung jedoch auch einen nachzurüstenden Systembereich darstellen kann.

Um die in einen Fahrzeuginnenraum einzuleitende Luft L zu fördern, ist ein allgemein mit 18 bezeichnetes Fahrzeuggebläse mit einem Fahrzeuggebläsemotor vorgesehen. Beispielsweise in Strömungsrichtung stromaufwärts des Fahrzeuggebläses 18 kann eine Frischluft/Umluft-Klappeneinheit 20 vorgesehen sein, welche von außen zugeführte Frischluft F und aus dem Fahrzeuginnenraum abgezogene Umluft U in einem vorbestimmbaren Verhältnis mischen kann. Die vom Fahrzeuggebläse 18 geförderte Luft kann vor dem Durchströmen des Wärmetauschers 12 in einer Wärmeluftklappeneinheit 22 in zwei Luftströme aufgeteilt werden, von welchen einer den Wärmetauscher 12 durchströmt, der andere den Wärmetauscher 12 umgeht. Somit kann der Anteil, der in den Fahrzeuginnenraum einzuleitenden Luft, welcher im Wärmetauscher 12 tatsächlich erwärmt werden soll, vorgegeben werden. Stromabwärts des Wärmetauschers 12 und beispielsweise nahe dem Fahrzeuginnenraum positioniert ist eine symbolisch für eine Mehrzahl von Luftklappeneinheiten stehende Luftklappeneinheit 24 dargestellt, durch welche die Ausströmrichtung bzw. der Ausströmort der in den Fahrzeuginnenraum einzuleitenden Luft L eingestellt werden kann. Beispielsweise kann durch die Luftklappeneinheit/en 24 die in den Fahrzeuginnenraum einzuleitende Luft L in Richtung zu der oder den Fensterscheiben eines Fahrzeugs geleitet werden, in Richtung zu einem vorderen Innenraumbereich oder einem hinteren Innenraumbereich oder/und in Richtung zum Fußraum geleitet werden. Das Fahrzeugtemperiersystem 10 kann weiter eine Klimaanlage umfassen, durch welche die in den Fahrzeuginnenraum einzuleitende Luft L erforderlichenfalls auch gekühlt werden kann.

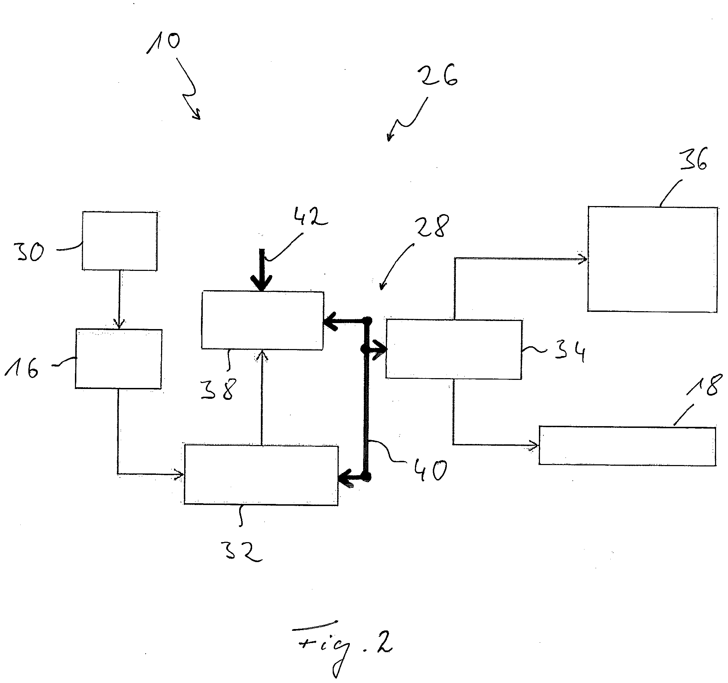

Um den Betrieb der verschiedenen anzusteuernden Systembereiche des Fahrzeugstemperiersystems 10 geeignet steuern bzw. regeln zu können, ist ein allgemein mit 26 bezeichneter und nachfolgend mit Bezug auf die Fig. 2 detailliert beschriebener Ansteuersystembereich vorgesehen, welcher während eines normalen Betriebs des Fahrzeugs das Fahrzeugtemperiersystem 10 geeignet betreiben kann, um im Fahrzeuginnenraum gewünschte klimatische Verhältnisse bereitstellen zu können. Der Ansteuersystembereich 26 ist ferner dazu ausgebildet beispielsweise in einem Standheizbetrieb vor der Inbetriebnahme eines Fahrzeugs dieses in gewünschter Weise thermisch zu konditionieren.

Bevor im Folgenden mit Bezug auf die Fig. 2 insbesondere auch der Aufbau des Ansteuersystembereichs 26 bzw. die Wechselwirkung der verschiedenen Komponenten desselben detailliert erläutert wird, sei darauf hingewiesen, dass der in Fig. 1 dargestellte Aufbau eines Fahrzeugtemperiersystems, insbesondere der verschiedenen zur Strömungsleitung bzw. auch zur Erzeugung der Luftströmung vorgesehenen Bestandteile desselben, in verschiedenster Weise variiert werden kann, ohne von den Prinzipien der vorliegenden Erfindung abzuweichen.

Der Ansteuersystembereich 26 umfasst als zentralen Bestandteil einen Fahrzeugdatenbus 28, beispielsweise CAN-Datenbus. Dieser Fahrzeugdatenbus 28 wird im Fahrzeug dazu genutzt, verschiedene Systembereiche des Fahrzeugs, insbesondere Ansteuergeräte, mit den für deren Betrieb erforderlichen Informationen zu versorgen bzw. derartige Systembereiche im Datenaustauschverbindung zu setzen.

Dem in Fig. 2 auch dargestellten Fahrzeugheizgerät 16 ist eine Bedienanordnung 30 zugeordnet, beispielsweise ein im Fahrzeug montiertes und zur Eingabe von betriebsrelevanten Daten geeignetes Bedienelement oder auch ein Fernsteuerbedienelement. Über diese Bedienanordnung 30 kann ein Fahrer die für den Betrieb des Fahrzeugheizgeräts 16 gewünschten Informationen bereitstellen bzw. hinterlegen, welche beispielsweise den beabsichtigten Zeitpunkt der Nutzungsaufnahme eines Fahrzeugs, die gewünschte Heizdauer bzw. auch die gewünschte Temperatur des Fahrzeuginnenraums umfassen können. Auf der Grundlage derartiger Informationen kann die Bedienanordnung 30 zur geeigneten Zeit und in der geeigneten Betriebsart das Fahrzeugheizgerät 16 in Betrieb setzen. Insbesondere kann die Bedienanordnung 30 auch einen Ein-Schalter umfassen, dessen Betätigung die unmittelbare Betriebsaufnahme des Fahrzeugheizgeräts 16 auslösen kann.

Der Ansteuersystembereich 26 umfasst ferner ein in Datenaustauschverbindung mit dem Fahrzeugdatenbus 28 stehendes Gebläsesteuergerät 32. Mit dem Fahrzeugdatenbus 28 steht weiterhin ein Klimasteuergerät 34 in Datenaustauschverbindung. Das Klimasteuergerät 34 steht wiederum in Ansteuerverbindung mit dem Fahrzeuggebläse 18 bzw. einem Gebläsemotor desselben und einer oder mehreren Luftströmungsbeeinflussungseinheiten 36, welche beispielsweise bereitgestellt sein können durch die in Fig. 1 dargestellte Frischluft/Umluft-Klappeneinheit 20, die Wärmeluftklappeneinheit 22 bzw. die Luftklappeneinheit/en 24.

Der Ansteuersystembereich 26 umfasst ferner in Zuordnung zu dem Fahrzeugdatenbus 28 eine z.B. als Relais- oder Schalteranordnung ausgebildete Fahrzeugdatenbus-Trenneinheit 38. Diese steht in Ansteuerverbindung mit dem Gebläsesteuergerät 32. Wie nachfolgend erläutert, kann bei entsprechender Ansteuerung die Fahrzeugdatenbus-Trenneinheit 38 einen Teil-Fahrzeugdatenbus 40 vom Rest-Fahrzeugdatenbus 42 abkoppeln bzw. trennen, so dass grundsätzlich der Fahrzeugdatenbus 28 durch die Fahrzeugdatenbus-Trenneinheit 38 in den Teil-Fahrzeugdatenbus 40 und den Rest-Fahrzeugdatenbus 42 aufgeteilt werden kann. Im Teil-Fahrzeugdatenbus 40 ist im Wesentlichen nur eine Datenaustauschverbindung zwischen dem Gebläsesteuergerät 32 und dem Klimasteuergerät 34 ermöglicht. Die durch die Fahrzeugdatenbus-Trenneinheit 38 vom Teil-Fahrzeugdatenbus 40 abgetrennten Systembereiche, welche in Datenaustauschverbindung mit dem Rest-Fahrzeugdatenbus 42 stehen, sind von dieser Datenaustauschverbindung zwischen dem Gebläsesteuergerät 32 und dem Klimasteuergerät 34 abgekoppelt.

Im Folgenden wird der Betrieb des vorangehend mit Bezug auf die Fig. 1 und 2 beschriebenen Fahrzeugtemperiersystems 10, insbesondere des Ansteuersystembereichs 26 bei Durchführung eines Heizbetriebs des Fahrzeugheizsgeräts 16, insbesondere eines Standheizbetriebs, erläutert.

Es sei zunächst angenommen, dass die Bedienanordnung 30 zu einem vorgegebenen Zeitpunkt das Fahrzeugheizgerät 16 in Betrieb setzt bzw. Informationen zum Fahrzeugheizgerät 16 leitet, die dieses zur Aufnahme des Heizbetriebs veranlassen. Dieses vorzugsweise brennstoffbetriebene Fahrzeugheizgerät 16 generiert Wärme und kann diese auf ein Wärmeträgermedium, also beispielsweise die im Kühlmittelkreislauf 14 zirkulierende Kühlflüssigkeit, übertragen. Beispielsweise mit Aufnahme des Heizbetriebs des Heizgeräts 16 oder dann, wenn das im Kühlmittelkreislauf 14 zirkulierende Wärmeträgermedium eine ausreichende Temperatur erreicht hat, generiert das Fahrzeugheizgerät 16 einen Aktivierungsansteuerbefehl für das Gebläsesteuergerät 32, so dass im Gebläsesteuergerät 32 erkannt wird, dass das Heizgerät 16 in Betrieb ist bzw. thermische Bedingungen geschaffen sind, die die Erwärmung des Fahrzeuginnenraums zulassen. Dieser Aktivierungsansteuerbefehl kann beispielsweise durch Anlegen eines Spannungssignals an einen entsprechenden Ansteuereingang des Gebläsesteuergeräts 32 repräsentiert sein.

In Reaktion auf den Empfang dieses Aktivierungsansteuerbefehls vom Fahrzeugheizgerät 16 gibt das Gebläsesteuergerät 32 einen Fahrzeugdatenbus-Trennbefehl an die Fahrzeugdatenbus-Trenneinheit 38 aus. In Reaktion auf diesen Fahrzeugdatenbus-Trennbefehl trennt die Fahrzeugdatenbus-Trenneinheit 38 den Teil-Fahrzeugdatenbus 40 vom Rest-Fahrzeugdatenbus 42, so dass, wie vorangehend dargelegt, eine im Rest-Fahrzeugdatenbus 42 nicht wahrgenommene Datenkommunikation im Teil-Fahrzeugdatenbus 40 erfolgen kann.

Nach dem Auftrennen des Fahrzeugdatenbusses 28 generiert das Gebläsesteuergerät 32 einen Aktivierungsansteuerbefehl für das Klimasteuergerät 34, welchen dieses über den Teil-Fahrzeugdatenbus 40 empfängt. Da zuvor das Klimasteuergerät 34, ebenso wie im Wesentlichen alle verbleibenden Systembereiche, die mit dem Fahrzeugdatenbus 28 in Datenaustauschverbindung stehen, in einem Außerbetriebszustand war, löst der Empfang des Aktivierungsansteuerbefehls zunächst eines Aktivierung des Klimasteuergeräts, also das Übergehen in einen Betriebszustand aus. In diesem Betriebszustand erwartet das Klimasteuergerät den Eingang von dessen folgenden Betrieb vorgebenden Befehlen über den Teil-Fahrzeugdatenbus 40. Derjenige Anteil des Aktivierungsansteuerbefehls für das Klimasteuergerät 34, welcher dieses aktiviert bzw. in einen Betriebszustand versetzt, kann beispielsweise einem "Zündung-Ein-Befehl" entsprechen, wie er bei normaler Inbetriebnahme eines Fahrzeugs über den Fahrzeugdatenbus 28 geleitet wird.

Der vom Gebläsesteuergerät 32 generierte Aktivierungsansteuerbefehl für das Klimasteuergerät 34 enthält nicht nur einen Befehlsbestandteil, welcher das Klimasteuergerät 34 aktiviert, sondern enthält auch Information darüber, wie das Klimasteuergerät 34 die von diesem anzusteuernden Systembereiche ansteuern soll. Beispielsweise kann für die Ansteuerung des Fahrzeuggebläses 18 bzw. des Gebläsemotors desselben vorgesehen sein, dass dieser mit einer vorbestimmten Drehzahl, beispielsweise einer in einem mittleren Drehzahlbereich liegenden Drehzahl, in Betrieb gesetzt wird. Es sei darauf hingewiesen, dass ein mittlerer Drehzahlbereich ein Drehzahlbereich sein kann, der im Wesentlichen in der Mitte eines Drehzahlspektrums zwischen einer Drehzahl Null und einer maximalen Drehzahl liegen kann.

Der vom Gebläsesteuergerät 34 generierte Aktivierungsansteuerbefehl für das Klimasteuergerät 34 kann ferner vorgeben, dass beispielsweise die als Luftströmungsbeeinflussungseinheit 36 zu interpretierende Frischluft/Umluft-Klappeneinheit 20 so einzustellen ist, dass diese ein vorbestimmtes Verhältnis von Frischluft F zu Umluft U bereitstellt. Ferner kann der Aktivierungsansteuerbefehl für das Klimasteuergerät 34 vorgeben, in welchem Verhältnis die Wärmeluftklappeneinheit 22 als Luftströmungsbeeinflussungseinheit 36 die in den Fahrzeuginnenraum einzuleitende L durch den Wärmetauscher 12 hindurch leitet bzw. um diesen herum führt. Schließlich kann der Aktivierungsansteuerbefehl für das Klimasteuergerät 34 auch vorgeben, wie die die Luft L in den Fahrzeuginnenraum leitenden Luftklappeneinheiten 24 zu stellen sind, um eine optimale Konditionierung des Fahrzeuginnenraums zu erreichen. Beispielsweise können diese in eine Defroststellung gebracht werden, welche dafür sorgt, dass die gesamte oder zumindest ein Großteil der in Fahrzeuginnenraum einzuleitenden Luft L in Richtung der Fensterscheiben des Fahrzeugs, insbesondere in Richtung zu einer Windschutzscheibe geleitet wird.

In der voranstehend beschriebenen Art und Weise wird durch die verschiedenen Aktivierungsansteuerbefehle und die zwischen dem Gebläsesteuergerät 32 und dem Klimasteuergerät 34 stattfindende Kommunikation dafür gesorgt, dass die im Fahrzeugheizgerät bereitgestellte Wärme in optimaler Art und Weise auf die in den Fahrzeuginnenraum einzuleitende Luft übertragen wird und somit zur Konditionierung des Fahrzeuginnenraums genutzt werden kann. Da in diesem Zustand auf Grund der Auftrennung des Fahrzeugdatenbusses 28 im Rest-Fahrzeugdatenbus 42 keinerlei Information vorliegt, welche im Zusammenhang mit der im Teil-Fahrzeugdatenbus 40 stattfindenden Kommunikation steht, besteht nicht die Gefahr, dass an den Rest-Fahrzeugdatenbus 42 angebundene Systembereiche in ungeeigneter Weise oder zur falschen Zeit in Betrieb gesetzt werden bzw. Fehlersignale generiert oder hinterlegt werden.

Soll beispielsweise nach ausreichender Erwärmung des Fahrzeuginnenraums der Standheizbetrieb beendet werden, wird das Fahrzeugheizgerät 16 deaktiviert, so dass auch die Erzeugung des zum Gebläsesteuergerät 32 geleiteten Aktivierungsansteuerbefehls beendet wird bzw. ein Deaktivierungsansteuerbefehl ausgegeben wird. In Reaktion darauf beendet das Gebläsesteuergerät 32 das Ausgeben des Aktivierungsansteuerbefehls für das Klimasteuergerät 34, so dass auch dieses die Ansteuerung des Fahrzeuggebläses 18 bzw. der Luftströmungsbeeinflussungseinheiten 36 einstellt. Dies hat zur Folge, dass der Motor des Fahrzeuggebläses 18 abgeschaltet wird und beispielsweise die Luftströmungsbeeinflussungseinheiten 36 in einen Zustand gebracht werden, den sie vor Aufnahme des Standheizbetriebs eingenommen hatten. Auch das Klimasteuergerät 34 wird auf Grund des Beendens des Ausgebens des Aktivierungsansteuerbefehls durch das Gebläsesteuergerät 32 oder durch das Ausgeben eines Deaktivierungsansteuerbefehls wieder in einen Außerbetriebszustand gebracht. Nachfolgend beendet das Gebläsesteuergerät 32 das Ausgeben des Fahrzeugdatenbus-Trennbefehls bzw. gibt zur Fahrzeugdatenbus-Trenneinheit 38 einen Befehl aus, der diese dazu veranlasst, die Verbindung zwischen dem Rest-Fahrzeugdatenbus 42 und dem Teil-Fahrzeugdatenbus 40 wieder herzustellen. All diese Übergänge in einen inaktiven Zustand können letztendlich dadurch ausgelöst werden, dass der vom Fahrzeugheizgerät 16 ausgegebene Aktivierungsansteuerbefehl nicht mehr ausgegeben wird und infolgedessen vom Gebläsesteuergerät 32 auch keine Aktivierungsansteuerbefehle bzw. kein Fahrzeugdatenbus-Trennbefehl mehr oder ausgegeben werden, woraufhin alle zuvor mit entsprechenden Befehlen beaufschlagten Systembereiche in einen inaktiven bzw. vor Durchführung des Fahrzeugheizbetriebs eingenommenen Zustand zurück gelangen und somit in einem für die Nutzungsaufnahme eines Fahrzeugs geeigneten Zustand sind.

Grundsätzlich kann nicht ausgeschlossen werden, dass noch während des Betriebs des Fahrzeugheizgeräts 16 die Nutzung eines Fahrzeugs aufgenommen werden soll. Dies kann beispielsweise dadurch erkannt werden, dass ein Fahrzeug geöffnet wird, eine Fahrzeugfernbedienung betätigt wird, ein Antriebsaggregat gestartet wird oder dergleichen. Derartige auf die Nutzungsaufnahme hindeutenden Aktivitäten werden durch die Übertragung entsprechender Befehle im Rest-Fahrzeugdatenbus 42 erkennbar. Da die Fahrzeugdatenbus-Trenneinheit 38 auch in Verbindung mit dem Rest-Fahrzeugdatenbus 42 steht und insofern die Übertragung von eine mögliche Nutzungsaufnahme des Fahrzeugs indizierenden Befehlen im Rest-Fahrzeugdatenbus 42 erkennt, wird in Reaktion auf derartige Aktivitäten die Fahrzeugdatenbus-Trenneinheit 38 die Auftrennung des Fahrzuegdatenbusses 28 in den Teil-Fahrzeugdatenbus 40 und den Rest-Fahrzeugdatenbus 42 beenden. Dies hat zur Folge, dass auch das Klimasteuergerät 34 und das Gebläsesteuergerät 32 wieder an den vollständigen Fahrzeugdatenbus 28 angebunden sind und insbesondere auch das Gebläsesteuergerät 32 Daten empfängt, welche auf die die Nutzungsaufnahme möglicherweise indizierenden Aktivitäten hindeuten. Sobald das Gebläsesteuergerät 32 über den Fahrzeugdatenbus 28 insbesondere derartige Daten empfängt, wird die durch den Aktivierungsansteuerbefehl vom Fahrzeugheizgerät 16 an sich befohlene Erzeugung des Fahrzeugdatenbus-Trennbefehls übersteuert und dieser Trennbefehl nicht weiter erzeugt. Ebenso wird das Gebläsesteuergerät 32 das Erzeugen des Aktivierungsansteuerbefehls für das Klimasteuergerät 34 einstellen, so dass, ähnlich wie bei einem normalen Abschaltvorgang, dieses die zuvor vorgegebene Ansteuerung des Fahrzeuggebläses 18 bzw. der Luftströmungsbeeinflussungseinheiten 36 einstellt und entweder in seinen Außerbetriebszustand geht oder in einen durch nunmehr im Fahrzeugdatenbus 28 übertragene Befehle vorgegebenen Betriebszustand geht und dementsprechend den Motor des Fahrzeuggebläses 18 bzw. verschiedene der Luftströmungsbeeinflussungseinheiten 36 ansteuert. Sofern in diesem Zustand das im Kühlmittelkreislauf zirkulierende Fahrzeugkühlmittel noch nicht ausreichend temperiert ist oder z.B. eine Solltemperatur des Fahrzeuginnenraums noch nicht erreicht ist, wird der Betrieb des Fahrzeugheizgeräts 16 fortgesetzt, was zur Folge hat, dass dieses, jedoch ohne weitere Reaktion seitens des Gebläsesteuergeräts 32, weiterhin den Aktivierungsansteuerbefehl an das Gebläsesteuergerät 32 ausgibt.

Sobald die Aktivitäten, welche auf die Inbetriebnahme des Fahrzeugs hingedeutet haben, beendet sind und entsprechende Daten bzw. Befehle über den Fahrzeugdatenbus 28 nicht mehr transportiert werden, erkennt das Gebläsesteuergerät 32 dies, so dass die vom Fahrzeugdatenbus 28 ausgelöste Übersteuerung aufgehoben wird und beispielsweise nach einer vorgegebenen Ruhezeit von einigen Sekunden das Gebläsesteuergerät 32 wieder beginnt, den Fahrzeugdatenbus-Trennbefehl an die Fahrzeugdatenbus-Trenneinheit 38 auszugeben. Diese trennt dann den Fahrzeugdatenbus 28 wieder in der vorangehend beschrieben Art und Weise in den Teil-Datenbus 40 und den Rest-Datenbus 42 auf, so dass nach Wiederaufnahme der Erzeugung bzw. Ausgabe des Aktvierungsansteuerbefehls vom Gebläsesteuergerät 32 zum Klimasteuergerät 34 auch dieses wieder entsprechend aktiviert wird bzw. zur Ansteuerung des Fahrzeuggebläses 18 bzw. der Luftströmungsbeeinflussungseinheiten 36 entsprechend dem Aktivierungsansteuerbefehl vom Gebläsesteuergerät 32 in Betrieb gesetzt wird. Es kann dann der vorübergehend unterbrochene Standheizbetrieb mit wiederaufgenommener Einspeisung von im Wärmetauscher 12 erwärmter Luft in den Fahrzeuginnenraum fortgesetzt werden.

Mit der vorangehend beschriebenen Vorgehensweise bzw. auch dem vorangehend beschriebenen Aufbau eines Fahrzeugtemperiersystems wird es möglich, in einfacher Art und Weise ein beispielsweise auch als Nachrüstsystem bereitgestelltes Fahrzeugheizgerät so in ein Fahrzeug bzw. ein Fahrzeugtemperiersystem zu integrieren, dass, obgleich keine unmittelbare Datenaustauschverbindung des Fahrzeugheizgeräts mit dem Fahrzeugdatenbus besteht, gleichwohl an den Fahrzeugdatenbus, insbesondere den Teil-Fahrzeugdatenbus angekoppelte Systembereiche des Fahrzeugtemperiersystems genutzt werden können, um beispielsweise bei Durchführung eines Standheizbetriebs auf verschiedene für die Einleitung thermisch konditionierter Luft in den Fahrzeuginnenraum relevante Systembereiche zugreifen zu können.

Die Erfindung betrifft also ein Verfahren zum Betreiben eines Fahrzeugtemperiersystems, bei welchem nach dem Aktivieren eines Fahrzeugheizgeräts 16:
a) das Fahrzeugheizgerät 16 einen Aktivierungsansteuerbefehl zu einem Gebläsesteuergerät 32 ausgibt,
b) das Gebläsesteuergerät 32 in Reaktion auf den Empfang des Aktivierungsansteuerbefehls vom Fahrzeugheizgerät 16 einen Fahrzeugdatenbus-Trennbefehl zu einer Fahrzeugdatenbus-Trenneinheit 38 ausgibt,
c) die Fahrzeugdatenbus-Trenneinheit 38 in Reaktion auf den Empfang des Fahrzeugdatenbus-Trennbefehls vom Gebläsesteuergerät 32 einen Fahrzeugdatenbus 28 zum Bereitstellen eines Teil-Fahrzeugdatenbusses 40 auftrennt,
d) nach Bereitstellung des Teil-Fahrzeugdatenbusses 40 das Gebläsesteuergerät 32 einen Aktvierungsansteuerbefehl zu einem Klimasteuergerät 34 ausgibt,
e) das Klimasteuergerät 34 in Reaktion auf den Empfang des Aktivierungsansteuerbefehls vom Gebläsesteuergerät 32 wenigstens ein Fahrzeugebläse 18 oder/und wenigstens eine Luftstrombeeinflussungseinheit 36 in einen vorgegebenen Betriebszustand versetzt.

## Patentansprüche

1. Verfahren zum Betreiben eines Fahrzeugtemperiersystems (10), wobei das Fahrzeugtemperiersystem(10) umfasst:
- einen Fahrzeugdatenbus (28),
- ein mit dem Fahrzeugdatenbus (28) in Datenaustauschverbindung stehendes Gebläsesteuergerät (32) zur Erzeugung von Ansteuerbefehlen wenigstens für wenigstens ein Fahrzeuggebläse (18),
- ein mit dem Fahrzeugdatenbus (28) in Datenaustauschverbindung stehendes Klimasteuergerät (34) zur Erzeugung von Ansteuerbefehlen wenigstens für wenigstens eine, vorzugsweise eine Mehrzahl von Luftströmungsbeeinflussungseinheiten (36), wobei das Klimasteuergerät (34) dazu ausgebildet ist, vom Gebläsesteuergerät (32) erzeugte Ansteuerbefehle wenigstens für wenigstens ein Fahrzeuggebläse (18) über den Fahrzeugdatenbus (28) zu empfangen und das wenigstens eine Fahrzeuggebläse (18) entsprechend den empfangenen Ansteuerbefehlen anzusteuern,
- ein vorzugsweise brennstoffbetriebenes Fahrzeugheizgerät (16) zur Bereitstellung von auf die in einen Fahrzeuginnenraum einzuleitende Luft zu übertragender Wärme, wobei dem Fahrzeugheizgerät (16) eine Bedienanordnung (30) zur Eingabe oder/und Erzeugung von einen durchzuführenden Heizbetrieb definierender Information zugeordnet ist, wobei das Fahrzeugheizgerät (16) in Ansteuerverbindung mit dem Gebläsesteuergerät (32) steht,
- eine Fahrzeugdatenbus-Trenneinheit (38) zum Auftrennen des Fahrzeugdatenbusses (28) derart, dass ein die Datenaustauschverbindung zwischen dem Gebläsesteuergerät (32) und dem Klimasteuergerät (34) zulassender, von einem Rest-Fahrzeugdatenbus (42) abgekoppelter Teil-Fahrzeugdatenbus (40) bereitgestellt wird, wobei die Fahrzeugdatenbus-Trenneinheit (38) in Ansteuerverbindung mit dem Gebläsesteuergerät (32) steht,
bei welchem Verfahren nach Aktivieren des Fahrzeugheizgeräts (16):
a) das Fahrzeugheizgerät (16) einen Aktivierungsansteuerbefehl zum Gebläsesteuergerät (32) ausgibt,
b) das Gebläsesteuergerät (32) in Reaktion auf den Empfang des Aktivierungsansteuerbefehls vom Fahrzeugheizgerät (16) einen Fahrzeugdatenbus-Trennbefehl zur Fahrzeugdatenbus-Trenneinheit (38) ausgibt,
c) die Fahrzeugdatenbus-Trenneinheit (38) in Reaktion auf den Empfang des Fahrzeugdatenbus-Trennbefehls vom Gebläsesteuergerät (32) den Fahrzeugdatenbus (28) zum Bereitstellen des Teil-Fahrzeugdatenbusses (40) auftrennt,
d) nach Bereitstellung des Teil-Fahrzeugdatenbusses (40) das Gebläsesteuergerät (32) einen Aktvierungsansteuerbefehl zum Klimasteuergerät (34) ausgibt,
e) das Klimasteuergerät (34) in Reaktion auf den Empfang des Aktivierungsansteuerbefehls vom Gebläsesteuergerät (32) wenigstens ein Fahrzeugebläse (18) oder/und wenigstens eine Luftstrombeeinflussungseinheit (36) in einen vorgegebenen Betriebszustand versetzt.

2. Verfahren nach Anspruch 1,
**dadurch gekennzeichnet, dass** durch den bei der Maßnahme d) durch das Gebläsesteuergerät (32) ausgegebenen Aktivierungsansteuerbefehl das Klimasteuergerät (34) in einen Betriebszustand versetzt wird, wobei im Betriebszustand das Klimasteuergerät (34) wenigstens ein Fahrzeuggebläse (18) oder/und wenigstens eine Luftströmungsbeeinflussungseinheit (36) in einen durch den Aktivierungsansteuerbefehl von dem Gebläsesteuergerät (32) vorgegebenen Betriebszustand versetzt.

3. Verfahren nach Anspruch 1 oder 2,
**dadurch gekennzeichnet, dass** in dem vorgegebenen Betriebszustand:
- wenigstens ein Fahrzeuggebläse (18) zum Betrieb mit einer vorbestimmten Drehzahl, vorzugsweise in einem mittleren Drehzahlbereich, angesteuert wird,
oder/und
- eine Wärmeluftklappeneinheit (22) als Luftströmungsbeeinflussungseinheit (36) in einem eine maximale Temperatur bereitstellenden Stellzustand ist,
oder/und
- wenigstens eine Luftklappeneinheit (24) als Luftströmungsbeeinflussungseinheit (36) in einer Defroststellung ist,
oder/und
- eine Frischluft/Umluft-Klappeneinheit (20) als Luftströmungsbeeinflussungseinheit (36) in einer ein vorbestimmtes Frischluft/Umluft-Verhältnis bereitstellenden Stellung ist.

4. Verfahren nach einem der Ansprüche 1 bis 3,
**dadurch gekennzeichnet, dass** nach Beenden des Betriebs des Fahrzeugheizgeräts (16):
f) das Gebläsesteuergerät (32) das Ausgeben des Aktivierungsansteuerbefehls an das Klimasteuergerät (34) beendet oder/und einen Deaktivierungsansteuerbefehl an das Klimasteuergerät (34) ausgibt, wobei nach Beenden des Ausgebens des Aktivierungsansteuerbefehls oder/und Empfang des Deaktivierungsansteuerbefehls das Klimasteuergerät (34) das wenigstens eine Fahrzeuggebläse (18) deaktiviert oder/und wenigstens eine Luftströmungsbeeinflussungseinheit (36) in einen vor Durchführung der Maßnahme e) vorgesehenen Grundzustand zurückverstellt und das Klimasteuergerät (34) einen Außerbetriebszustand einnimt,
g) das Gebläsesteuergerät (32) das Ausgeben des Fahrzeugdatenbus-Trennbefehls beendet oder/und einen Fahrzeugdatenbus-Verbinden-Befehl zur Fahrzeugdatenbus-Trenneinheit (38) ausgibt, wobei nach Beenden des Ausgebens des Fahrzeugdatenbus-Trennbefehls oder/und Empfang des Fahrzeugdatenbus-Verbinden-Befehls die Fahrzeugdatenbus-Trenneinheit (38) das Auftrennen des Fahrzeugdatenbusses (28) zum Bereitstellen des Teil-Fahrzeugdatenbusses (40) beendet.

5. Verfahren nach einem der Ansprüche 1 bis 4,
**dadurch gekennzeichnet, dass** dann, wenn während des Betriebs des Fahrzeugsheizgeräts (16) auf eine Inbetriebnahme eines Fahrzeugs hinweisende Aktivitäten erkannt werden,
h) die Fahrzeugdatenbus-Trenneinheit (38) das Auftrennen des Fahrzeugdatenbusses (28) beendet,
i) das Gebläsesteuergerät (32) nach dem Beenden des Auftrennens des Fahrzeugdatenbusses (28) das Ausgeben des Aktivierungsansteuerbefehls an die Datenbus-Trenneinheit (38) und das Ausgeben des Aktivierungsansteuerbefehls an das Klimasteuergerät (34) beendet.

6. Verfahren nach Anspruch 5,
**dadurch gekennzeichnet, dass** das Fahrzeugheizgerät (16) den Heizbetrieb (16) vorzugsweise in Abhängigkeit von der Temperatur eines von dem Fahrzeugheizgerät zu erwärmenden Wärmeträgermediums fortsetzt und weiterhin den Aktivierungsansteuerbefehl an das Gebläsesteuergerät (32) ausgibt.

7. Verfahren nach Anspruch 6,
**dadurch gekennzeichnet, dass** dann, wenn die auf eine Inbetriebnahme eines Fahrzeugs hinweisenden Aktivitäten vor einem vorgesehenen Betriebsende des Fahrzeugheizgeräts (16) beendet werden, die Maßnahmen b) bis e) erneut durchgeführt werden.

8. Fahrzeugtemperiersystem, insbesondere zur Durchführung eines Verfahrend nach einem der vorangehenden Ansprüche, umfassend:
- einen Fahrzeugdatenbus (28),
- ein mit dem Fahrzeugdatenbus (28) in Datenaustauschverbindung stehendes Gebläsesteuergerät (32) zur Erzeugung von Ansteuerbefehlen wenigstens für wenigstens ein Fahrzeuggebläse (18),
- ein mit dem Fahrzeugdatenbus (28) in Datenaustauschverbindung stehendes Klimasteuergerät (34) zur Erzeugung von Ansteuerbefehlen wenigstens für wenigstens eine, vorzugsweise eine Mehrzahl von Luftströmungsbeeinflussungseinheiten (36), wobei das Klimasteuergerät (34) dazu ausgebildet ist, vom Gebläsesteuergerät (32) erzeugte Ansteuerbefehle wenigstens für wenigstens ein Fahrzeuggebläse (18) über den Fahrzeugdatenbus (28) zu empfangen und das wenigstens eine Fahrzeuggebläse (18)entsprechend den empfangenen Ansteuerbefehlen anzusteuern,
- ein vorzugsweise brennstoffbetriebenes Fahrzeugheizgerät (16) zur Bereitstellung von auf die in einen Fahrzeuginnenraum einzuleitende Luft zu übertragender Wärme, wobei dem Fahrzeugheizgerät (16) eine Bedienanordnung (30) zur Eingabe oder/und Erzeugung von einen durchzuführenden Heizbetrieb definierender Information zugeordnet ist, wobei das Fahrzeugheizgerät (16) in Ansteuerverbindung mit dem Gebläsesteuergerät (32) steht,
- eine Fahrzeugdatenbus-Trenneinheit (38) zum Auftrennen des Fahrzeugdatenbusses (28) derart, dass ein die Datenaustauschverbindung zwischen dem Gebläsesteuergerät (32) und dem Klimasteuergerät (34) zulassender, von einem Rest-Fahrzeugdatenbus (42) abgekoppelter Teil-Fahrzeugdatenbus (40) bereitgestellt wird, wobei die Fahrzeugdatenbus-Trenneinheit (38) in Ansteuerverbindung mit dem Gebläsesteuergerät (32) steht.

## Claims

1. Method for operating a vehicle temperature control system (10), wherein the vehicle temperature control system (10) comprises:
- a vehicle data bus (28),
- a blower control unit (32) in data exchange connection with the vehicle data bus (28) for generating actuating commands at least for at least one vehicle blower (18),
- an air-conditioning control unit (34) in data exchange connection with the vehicle data bus (28) for generating actuating commands at least for at least one, preferably a plurality of, air flow influencing units (36), wherein the air-conditioning control unit (34) is configured to receive actuating commands generated by the blower control unit (32) at least for at least one vehicle blower (18) via the vehicle data bus (28) and to actuate the at least one vehicle blower (18) corresponding to the actuating commands received,
- a preferably fuel-operated vehicle heater (16) for providing heat to be transferred to the air to be introduced into a vehicle interior, wherein an operating device (30) for inputting or/and generating information defining a heating operation to be carried out is associated with the vehicle heater (16), wherein the vehicle heater (16) is in actuating connection with the blower control unit (32), and
- a vehicle data bus separation unit (38) for separating the vehicle data bus (28) such that a partial vehicle data bus (40) permitting the data exchange connection between the blower control unit (32) and the air-conditioning control unit (34) is provided, wherein the vehicle data bus separation unit (38) is in actuating connection with the blower control unit (32),
in which method after activating the vehicle heater (16):
a) the vehicle heater (16) sends an activation actuating command to the blower control unit (32),
b) the blower control unit (32) sends a vehicle data bus separation command to the vehicle data bus separation unit (38) in response to the receipt of the activation actuating command from the vehicle heater (16),
c) the vehicle data bus separation unit (38) separates the vehicle data bus (28) for providing the partial vehicle data bus (40) in response to the receipt of the vehicle data bus separation command from the blower control unit (32),
d) the blower control unit (32) sends an activation actuating command to the air-conditioning control unit (34) after providing the partial vehicle data bus (40),
e) the air-conditioning control unit (34) puts at least one vehicle blower (18) or/and at least one air flow influencing unit (36) into a specified operating state in response to the receipt of the activation actuating command from the blower control unit (32).

2. Method in accordance with claim 1,
**characterized in that** the air-conditioning control unit (34) is put into an operating state by the activation actuating command sent by the blower control unit (32) in step d), wherein in the operating state, the air-conditioning control unit (34) puts at least one vehicle blower (18) or/and at least one air flow influencing unit (36) into an operating state specified by the activation actuating command from the blower control unit (32).

3. Method in accordance with claim 1 or 2,
**characterized in that** in the specified operating state:
- at least one vehicle blower (18) is activated for operation at a predetermined speed, and preferably within an average speed range,
or/and
- a hot air flap unit (22) as an air flow influencing unit (36) is in an actuating state providing a maximum temperature,
or/and
- at least one air flap unit (24) as an air flow influencing unit (36) is in a defrost position,
or/and
- a fresh air/circulating air flap unit (20) as an air flow influencing unit (36) is in a position providing a predetermined fresh air/circulating air ratio.

4. Method in accordance with one of the claims 1 through 3,
**characterized in that** after ending the operation of the vehicle heater (16):
f) the blower control unit (32) ends the sending of the activation actuating command to the air-conditioning control unit (34) or/and sends a deactivation actuating command to the air-conditioning control unit (34), wherein after ending the sending of the activation actuating command or/and receipt of the deactivation actuating command, the air-conditioning control unit (34) deactivates the at least one vehicle blower (18) or/and puts at least one air flow influencing unit (36) back into an initial state provided before carrying out step e), and the air-conditioning control unit (34) assumes an inoperative state, and
g) the blower control unit (32) ends the sending of the vehicle data bus separation command or/and sends a vehicle data bus connect command to the vehicle data bus separation unit (38), wherein after ending the sending of the vehicle data bus separation command or/and receipt of the vehicle data bus connect command, the vehicle data bus separation unit (38) ends the separation of the vehicle data bus (28) for providing the partial vehicle data bus (40).

5. Method in accordance with one of the claims 1 through 4,
**characterized in that**, if activities indicating a start-up of a vehicle are detected during the operation of the vehicle heater (16),
h) the vehicle data bus separation unit (38) ends the separation of the vehicle data bus (28), and,
i) after the ending of the separation of the vehicle data bus (28), the blower control unit (32) ends the sending of the activation actuating command to the data bus separation unit (38) and the sending of the activation actuating command to the air-conditioning control unit (34).

6. Method in accordance with claim 5,
**characterized in that** the vehicle heater (16) resumes the heating operation (16) preferably as a function of the temperature of a heat transfer medium to be heated by the vehicle heater and continues to send the activation actuating command to the blower control unit (32).

7. Method in accordance with claim 6,
**characterized in that**, if the activities indicating a start-up of a vehicle are ended before an intended end of operation of the vehicle heater (16), steps b) through e) are carried out again.

8. Vehicle temperature control system, especially for carrying out a method in accordance with one of the above claims, comprising:
- a vehicle data bus (28),
- a blower control unit (32) in data exchange connection with the vehicle data bus (28) for generating actuating commands at least for at least one vehicle blower (18),
- an air-conditioning control unit (34) in data exchange connection with the vehicle data bus (28) for generating actuating commands at least for at least one, preferably a plurality of, air flow influencing units (36), wherein the air-conditioning control unit (34) is configured to receive actuating commands generated by the blower control unit (32) at least for at least one vehicle blower (18) via the vehicle data bus (28) and to actuate the at least one vehicle blower (18) corresponding to the actuating commands received,
- a preferably fuel-operated vehicle heater (16) for providing heat to be transferred to the air to be introduced into a vehicle interior, wherein an operating device (30) for inputting or/and generating information defining a heating operation to be carried out is associated with the vehicle heater (16), wherein the vehicle heater (16) is in actuating connection with the blower control unit (32),
- a vehicle data bus separation unit (38) for separating the vehicle data bus (28) such that a partial vehicle data bus (40) permitting the data exchange connection between the blower control unit (32) and the air-conditioning control unit (34) is provided, wherein the vehicle data bus separation unit (38) is in actuating connection with the blower control unit (32).

## Revendications

1. Un procédé pour opérer un système de thermorégulation de véhicule (10), le système de thermorégulation de véhicule (10) comprenant:
- un bus de données pour véhicule (28),
- une unité de commande de ventilateur (32) en connexion d'échange de données avec le bus de données pour véhicule (28) pour générer des ordres de commande, au moins pour au moins un ventilateur de véhicule (18),
- une unité de commande de système de climatisation (34) en connexion d'échange de données avec le bus de données pour véhicule (28) pour générer des ordres de commande, au moins pour au moins une, de préférence pour une pluralité d'unités influençant la circulation d'air (36), où l'unité de commande de système de climatisation (34) est configurée pour recevoir des ordres de commande générés par l'unité de commande de ventilateur (32) au moins pour au moins un ventilateur de véhicule (18) via le bus de données pour véhicule (28) et pour actuer ledit au moins un ventilateur de véhicule (18) selon les ordres de commande reçus,
- un dispositif de chauffage de véhicule (16), de préférence à combustion, pour prévoir de la chaleur à transférer à l'air qui doit être insérée dans un intérieur de véhicule, ou un arrangement d'opération (30) pour introduire ou/et générer une information définissant une opération de chauffage à effectuer est associé au dispositif de chauffage de véhicule (16), où le dispositif de chauffage de véhicule (16) est en connexion de commande avec l'unité de commande de ventilateur (32),
- une unité de séparation de bus de données pour véhicule (38) pour séparer le bus de données pour véhicule (28) de sorte qu'un bus de données pour véhicule partiel (40) est prévu, découplé du reste du bus de données pour véhicule (42), permettant la connexion d'échange de données entre l'unité de commande de ventilateur (32) et l'unité de commande de système de climatisation (34), où l'unité de séparation de bus de données pour véhicule (38) est en connexion de commande avec l'unité de commande de ventilateur (32),
où avec ledit procédé, après l'activation du dispositif de chauffage de véhicule (16) :
a) le dispositif de chauffage de véhicule (16) envoie un ordre de commande d'activation à l'unité de commande de ventilateur (32),
b) l'unité de commande de ventilateur (32) envoie un ordre de séparation de bus de données de véhicule à l'unité de séparation de bus de données pour véhicule (38) en réponse à la réception de l'ordre de commande d'activation du dispositif de chauffage de véhicule (16),
c) l'unité de séparation de bus de données pour véhicule (38) sépare le bus de données pour véhicule (28) pour prévoir le bus de données pour véhicule partiel (40) en réponse à la réception de l'ordre de séparation de bus de données pour véhicule de l'unité de commande de ventilateur (32),
d) l'unité de commande de ventilateur (32) envoie un ordre de commande d'activation à l'unité de commande de système de climatisation (34) après avoir prévu le bus de données pour véhicule partiel (40),
e) l'unité de commande de système de climatisation (34) met au moins un ventilateur de véhicule (18) ou/et au moins une unité influençant la circulation d'air (36) dans un état d'opération prédéfini, en réponse à la réception de l'ordre de commande d'activation de l'unité de commande de ventilateur (32).

2. Le procédé selon la revendication 1,
**caractérisé en ce que** l'unité de commande de système de climatisation (34) est mise dans un état d'opération par l'ordre de commande d'activation envoyé par l'unité de commande de ventilateur (32) pendant l'étape d), où, dans l'état d'opération, l'unité de commande de système de climatisation (34) met au moins un ventilateur de véhicule (18) ou/et au moins une unité influençant la circulation d'air (36) dans un état opérationnel prédéfini par l'ordre de commande d'activation de l'unité de commande de ventilateur (32).

3. Le procédé selon les revendications 1 ou 2,
**caractérisé en ce que** dans l'état opérationnel prédéfini :
- au moins un ventilateur de véhicule (18) est actué pour l'opération avec une vitesse prédéfinie, de préférence dans un régime moyen de vitesse,
ou/et
- une unité de clapet d'air chaud (22) en tant qu'unité influençant la circulation d'air (36) est dans un état de réglage prévoyant une température maximale,
ou/et
- au moins une unité de clapet d'air (24) en tant qu'unité influençant la circulation d'air (36) est dans une position de dégivrage,
ou/et
- une unité de clapet d'air frais/d'air ambiant (20) en tant qu'unité influençant la circulation d'air (36) est dans une position prévoyant un rapport prédéterminé d'air frais/d'air ambiant.

4. Le procédé selon une des revendications 1 à 3,
**caractérisé en ce que**, après avoir terminé l'opération du dispositif de chauffage de véhicule (16) :
f) l'unité de commande de ventilateur (32) termine l'envoi de l'ordre de commande d'activation au dispositif de commande de système de climatisation (34) ou/et envoie un ordre de commande de désactivation au dispositif de commande de système de climatisation (34), où après avoir terminé l'envoi de l'ordre de commande d'activation ou/et la réception de l'ordre de commande de désactivation, le dispositif de commande de système de climatisation (34) désactive ledit au moins un ventilateur de véhicule (18) ou/et remet au moins une unité influençant la circulation d'air (36) dans un état de base prévu avant la réalisation de l'étape e) et **en ce que** l'unité de commande de système de climatisation (34) assume un état de repos,
g) l'unité de commande de ventilateur (32) termine l'envoi de l'ordre de séparation du bus de données pour véhicule ou/et envoie un ordre de connexion de bus de données pour véhicule à l'unité de séparation de bus de données pour véhicule (38), où après avoir terminé l'envoi de l'ordre de séparation du bus de données pour véhicule ou/et la réception de l'ordre de connexion de bus de données pour véhicule, l'unité de séparation de bus de données pour véhicule (38) termine la séparation du bus de données pour véhicule (28) pour prévoir le bus de données pour véhicule partiel (40).

5. Le procédé selon une des revendications 1 à 4,
**caractérisé en ce que**, si, pendant l'opération du dispositif de chauffage de véhicule (16), des activités indiquant une mise en service du véhicule sont détectées, h)
l'unité de séparation de bus de données pour véhicule (38) termine la séparation du bus de données pour véhicule (28),
i) l'unité de commande de ventilateur (32) termine, après avoir terminé la séparation du bus de données pour véhicule (28), l'envoi de l'ordre de commande d'activation à l'unité de séparation de bus de données pour véhicule (38) et l'envoie de l'ordre de commande d'activation au dispositif de commande de système de climatisation (34).

6. Le procédé selon la revendication 5,
**caractérisé en ce que** le dispositif de chauffage de véhicule (16) continue l'opération de chauffage (16), de préférence en fonction de la température d'un caloporteur à chauffer par le dispositif de chauffage de véhicule, et continue d'envoyer l'ordre de commande d'activation au dispositif commande de ventilateur (32).

7. Le procédé selon la revendication 6,
**caractérisé en ce que**, quand les activités indiquant une mise en marche du véhicule sont terminées avant une fin prévue de l'opération du dispositif de chauffage de véhicule (16), les mesures b) à e) sont répétées.

8. Un système de thermorégulation de véhicule, en particulier pour réaliser un procédé selon une des revendications précédentes, comprenant :
- un bus de données pour véhicule (28),
- une unité de commande de ventilateur (32) en connexion d'échange de données avec le bus de données pour véhicule (28) pour générer des ordres de commande, au moins pour au moins un ventilateur de véhicule (18),
- une unité de commande de système de climatisation (34) en connexion d'échange de données avec le bus de données pour véhicule (28) pour générer des ordres de commande, au moins pour au moins une, de préférence pour une pluralité d'unités influençant la circulation d'air (36), où l'unité de commande de système de climatisation (34) est configurée pour recevoir des ordres de commande générés par l'unité de commande de ventilateur (32) au moins pour au moins un ventilateur de véhicule (18) via le bus de données pour véhicule (28) et pour commander ledit au moins un ventilateur de véhicule (18) selon les ordres de commande reçus,
- un dispositif de chauffage de véhicule (16), de préférence à combustion, pour prévoir de la chaleur à être transférée à l'air à être insérée dans un intérieur de véhicule, ou un arrangement d'opération (30) pour introduire ou/et générer une information définissant une opération de chauffage à effectuer est associé au dispositif de chauffage de véhicule (16), où le dispositif de chauffage de véhicule (16) est en connexion de commande avec l'unité de commande de ventilateur (32),
- une unité de séparation de bus de données pour véhicule (38) pour séparer le bus de données pour véhicule (28) de sorte qu'un bus de données pour véhicule partiel (40) est prévu, découplé du reste du bus de données pour véhicule (42), permettant la connexion d'échange de données entre l'unité de commande de ventilateur (32) et l'unité de commande de système de climatisation (34), où l'unité de séparation de bus de données pour véhicule (38) est en connexion de commande avec l'unité de commande de ventilateur (32).
